# FASCICULE DE BREVET EUROPEEN

(11) **EP 2 063 016 B1**
(45) Date de publication et mention de la délivrance du brevet: **23.08.2023**
(21) Numéro de dépôt: 08356146.4
(22) Date de dépôt: 26.11.2008
(51) Int. Cl.: D06M 11/74, D06M 15/693, D06M 23/08, C08J 5/06, C08K 3/04, C08L 61/06, C08L 61/14

(54) **Revêtement d'adhérisage ou film RFL comportant des nanotubes de carbone et fil comportant un tel revêtement**
Klebebeschichtung oder RFL-Folie, die Kohlenstoffnanoröhren umfasst, und damit beschichteter Draht
Dip coating or RFL film coating comprising carbon nanotubes and wire comprising such a coating

(30) Priorité: 26.11.2007 FR 0759321
(43) Date de publication de la demande: 27.05.2009
(73) Titulaire: Porcher Industries, 38300 Badinières (FR)
(72) Inventeur: Tonon, Corinne, 26400 Mirabel-et-Blacons (FR); Vial, Isabelle, 26000 Valence (FR); Lambour, Stéphanie, 69780 Mions (FR)
(74) Mandataire: Lavoix

(56) Documents cités:
- WO-A-2007/130979
- JP-A- 2003 322 216
- US-A1- 2006 166 003

## Description

### Domaine technique

L'invention concerne le domaine des éléments de renforcement longitudinal d'articles à base de caoutchouc tels que des courroies, en particulier les courroies de transmission synchrone, des pneumatiques à usage automobile ou analogue, ou bien encore des tuyaux, durites ou conduites et également des amortisseurs à air. Elle vise plus particulièrement un procédé permettant d'obtenir un fil de renforcement qui présente des propriétés d'accroche aux matériaux caoutchoutiques qui sont améliorées, en particulier, en termes de longévité, de tenue en température et de résistance aux contraintes de cisaillement.

De façon générale, on entendra dans la suite par « matériau caoutchoutique » non seulement les matériaux à base de caoutchouc naturel (ou polyisoprène), ou de caoutchoucs synthétiques à base notamment de polychloroprène, ou de polyacrylonitrile hydrogéné ou non, mais aussi de façon élargie les matériaux ayant un comportement que l'on peut qualifier d'analogue à celui du caoutchouc, en particulier en ce qui concerne ses propriétés élastiques qui autorisent un allongement de plusieurs fois leur longueur d'origine, avec reprise de la forme initiale sans déformation rémanente. On peut à titre d'exemple citer certains élastomères à base de polybutadiène, de polyisobutylène, et de polyuréthanes.

### Techniques antérieures

Il est bien connu de renforcer certains articles à base de caoutchouc, en particulier lorsqu'ils sont soumis à des contraintes mécaniques importantes, pour éviter leur allongement excessif voire leur dégradation.

Ainsi, on utilise généralement comme élément de renfort des fils textiles susceptibles de résister à des fortes contraintes de traction, en particulier ceux dont l'allongement est quasi nul.

Les fils de verre, de carbone, voire d'aramide (c'est-à-dire des fils constitués d'une pluralité de filaments de cette matière) sont connus pour donner de bons résultats.

Toutefois, ces fils doivent subir des traitements d'adhérisage destinés à améliorer leurs propriétés d'accroche avec le matériau caoutchoutique. Ainsi, il est essentiel que le matériau caoutchoutique adhère aussi intimement que possible aux fils de renforcement, afin que ces derniers assurent leur fonction.

Ainsi, parmi les traitements d'adhérisage très largement employés, on connaît les imprégnations dans des solutions à base de résine de résorcinol formaldéhyde et de latex de caoutchouc, solutions connues sous l'abréviation RFL.

Ce traitement d'adhérisage peut être suivi d'un deuxième traitement appelé « topcoat » qui est en général constitué d'une dissolution de matériau caoutchoutique dans un solvant, appelé en anglais « rubber cernent » qui a pour rôle de favoriser l'accroche du caoutchouc constitutif de l'objet au fil portant son revêtement d'adhérisage.

La solution de RFL peut dans certains cas, inclure une certaine proportion de noir de carbone, typiquement jusqu'à 10 %. Ces particules de noir de carbone jouent le rôle de charge et améliorent la tenue mécanique de l'imprégnation qui recouvre les fibres textiles, voir par exemple les formulations décrites dans la demande WO02/055590.

WO 2007/130979 décrit le renforcement de fibres de carbone au moyen de nanotubes de carbone déposés à sec ou à l'aide d'une solution pouvant comprendre un solvant, un adhésif ou un ensimage.

On connaît de façon générale l'utilisation des nanotubes de carbone pour améliorer l'accroche des revêtements sur des fibres et leur utilisation dans des composites comme par exemple dans les composites en résine époxy décrits dans WO2005/028174. Outre que les nanotubes peuvent être fonctionnalisés , ces composites ne sont pas soumis aux mêmes contraintes mécaniques l'utilisation de nanotubes qui sont additionnés à la dissolution de matériau caoutchoutique dans un solvant ou topcoat ladite dissolution étant enduite sur un tissu préalablement imprégné d'un traitement d'adhérisage.

Mais lorsque l'article composite est soumis à des contraintes mécaniques importantes, par exemple en traction, flexion ou contre-flexion, l'interface entre d'une part le fil, et plus précisément son revêtement, et d'autre part le matériau caoutchoutique, subit des contraintes de cisaillement. Une dégradation de l'intégrité du revêtement qui recouvre le fil et des différentes interfaces présentes dans le matériau provoque inévitablement l'apparition de phénomènes de glissement entre le fil et le matériau caoutchoutique. Ces phénomènes sont d'autant plus nombreux que les contraintes mécaniques sont élevées.

Le travail à haute température est également un facteur qui dégrade l'intégrité du revêtement du fil et les interfaces entre matériaux.

Les traitements de l'art antérieur ci-dessus décrits s'ils permettent d'améliorer l'accroche entre le caoutchouc et le revêtement d'adhérisage ne permettent cependant pas d'améliorer les propriétés mécaniques dynamiques de ce revêtement d'adhérisage ou film RFL. Les faiblesses observées lors de soumissions des objets ainsi renforcés à des contraintes mécaniques élevées sont ainsi dues aux faiblesses du revêtement d'adhérisage ou film RFL.

Le document JP 2003 322216 A décrit une courroie dentée a base de caoutchouc renforcée par un tissu préalablement imprégné par une composition comprenant un latex de matériau caoutchouteux et une résine résorcinol formaldéhyde (RFL) incluant des nanotubes de carbone,

Un des objectifs de l'invention est d'améliorer les propriétés mécaniques, notamment dynamiques du revêtement d'adhérisage ou film RFL pour augmenter la durée de vie de l'article composite.

Un autre objectif est d'améliorer la tenue dans le temps des propriétés mécaniques d'adhérence entre le fil de renforcement et le matériau caoutchoutique. Un autre objectif est de permettre un fonctionnement à des températures plus élevées sans dégradation de ses propriétés mécaniques.

### Exposé de l'invention

L'invention concerne donc un élément de renfort longitudinal à base de fils, destiné à être incorporé dans un article à base de matériau caoutchoutique. Par « fil », on entend des fils constitués par l'assemblage de multiples filaments, mais aussi les fils mono-torons ou mono-filamentaires. Ces fils peuvent être utilisés en étant pris tels quels, ou bien encore après assemblage avec des fils de nature similaire ou différente, par des opérations de câblage et/ou retordage

De façon connue, ce fil comporte un revêtement d'adhérisage et conformément à l'invention, ce revêtement inclut des nanotubes de carbone.

Selon les enseignements précités, les nanotubes de carbone sont classiquement additionnés à des compositions comportant des solvants.

Le revêtement d'adhérisage ou film RFL est lui constitué d'une composition aqueuse comprenant une résine résorcinol-formaldéhyde et de latex de matériau caoutchoutique.

L'incorporation des nanotubes de carbone dans une telle composition à pH basique sans détériorer le latex et en obtenant une suspension homogène de nanotubes est un problème qui a été résolu par la présente invention.

L'invention concerne plus particulièrement fil revêtu ou imprégné d'un revêtement tel que décrit à la revendication 1.

Dans un mode de réalisation le fil est choisi dans le groupe comprenant les fils de verre, de carbone, d'aramide, de polyester, de polyvinylalcool, de polyamide et de rayonne.

Elle concerne ledit fil comportant en outre un revêtement ou topcoat à base de dissolution de matériau caoutchoutique dans un solvant comportant ou non des nanotubes de carbone.

Elle concerne également l'utilisation des fils ainsi traités pour le renfort d'un article à base de matériau caoutchoutique, ledit article pouvant être une courroie, un tuyau, une durite, une conduite ou un pneumatique et de façon générale tout objet soumis à des contraintes de cisaillement.

Elle concerne également un élément de renfort longitudinal à base de fils selon l'invention, destiné à être incorporé dans un article à base de matériau caoutchoutique

Elle concerne également le procédé de préparation dudit fil revêtu ou imprégné d'un revêtement d'adhérisage

Par "nanotube" de carbone, on entend des structures cristallines particulières, de forme tubulaire, composées d'atomes de carbone disposés régulièrement, également appelés fullerènes tubulaires.

Autrement dit, la couche de revêtement d'adhérisage ou film RFL qui recouvre le fil inclut des particules de structure filiforme, de faible diamètre, typiquement de l'ordre du nanomètre, au regard de leur longueur qui est de l'ordre du micromètre. Ces structures filiformes agissent en quelle que sorte comme une armature de la couche de revêtement qui les contient, et améliorent ainsi la résistance mécanique de cette dernière.

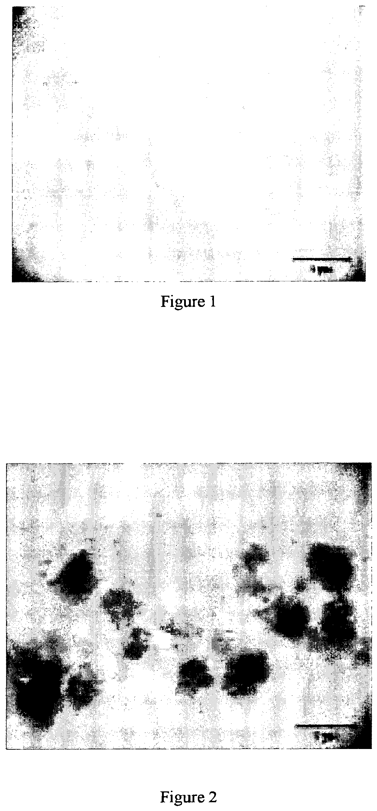

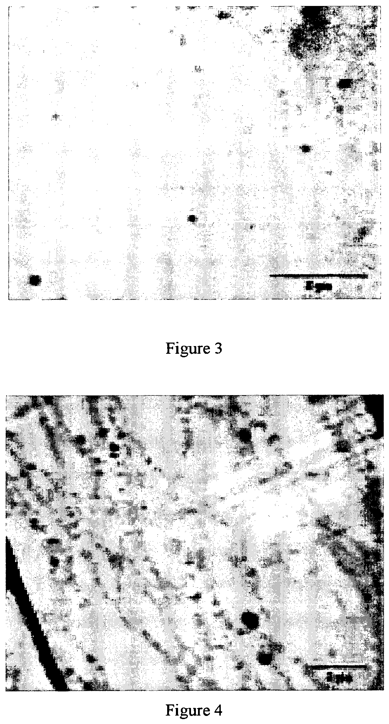

Ainsi, par rapport aux solutions incluant des charges telles que du noir de carbone, l'intégrité du revêtement est améliorée par l'enchevêtrement des chaînes moléculaires des polymères de la matrice du revêtement avec les chaînes que forment les nanotubes, voir figures 1 à 4 qui sont des photographies en Microscopie Electronique à Transmission (MET) des fibres RFL.
La Figure 1 est une photographie en MET d'un RFL non chargé.
La Figure 2 est une photographie en MET d'un RFL chargé à 2 % de nanotubes.
La Figure 3 est une photographie en MET d'un RFL chargé à 2 % de nanotubes.
La Figure 4 est une photographie en MET d'un RFL chargé à 5 % de nanotubes.

En pratique, ces nanotubes de carbone peuvent être présents dans la ou les autres couches de revêtement, en fonction de l'application souhaitée.

Ainsi, les nanotubes de carbone peuvent être noyés dans le revêtement d'adhérisage ou film RFL.

Il est également possible d'inclure des nanotubes de carbone dans la couche de revêtement extérieure, qui recouvre elle-même le revêtement d'adhérisage ou film RFL. Cette couche de revêtement extérieure est généralement un adhésif en milieu solvant, et par exemple un mélange de polymères éventuellement halogénés ou de composés organiques comme des isocyanates. En d'autres termes, la couche extérieure ou "top coat" qui recouvre le fil comportant le revêtement d'adhérisage ou film RFL, peut comporter également des nanotubes qui améliorent son comportement thermomécanique et sa longévité et ses propriétés d'accroche avec le matériau caoutchoutique constitutif de l'article renforcé.

En pratique, les fils choisis pour former les fils de renfort peuvent être des fils de verre, de carbone, d'aramide ou d'autres matières synthétiques telles que le polyvinylalcool (PVA), le polyester, la rayonne ou le polyamide. Ces fils peuvent comporter des filaments de composition homogène, ou inclure un mélange de filaments de natures différentes. Ces fils peuvent être utilisés individuellement ou être assemblés avec des fils similaires ou différents, par des opérations de câblage et/ou de retordage.

La teneur en nanotubes de carbone est de l'ordre de 0,5 à 10 % en poids en nanotubes de carbone, proportion mesurée en extrait sec dans le revêtement d'adhérisage ou film RFL.

Des résultats satisfaisants ont été obtenus avec une proportion de 2 % de nanotubes. En effet, une proportion trop faible de nanotubes n'engendre pas d'effet de renforcement significatif. A l'inverse, une présence trop importante de nanotubes de carbone peut entraîner la formation d'agglomérats de nanotubes et la formation de particules de grosses dimensions qui engendrent des points de faiblesse.

De manière générale, en fonction des applications souhaitées, les nanotubes de carbone utilisés peuvent être de type mono ou multi feuillets. Il s'agit respectivement de structures tubulaires comportant une seule couche d'atomes répartis selon un cylindre unique, ou selon plusieurs cylindres co-axiaux.

Avantageusement en pratique, les nanotubes présentent une longueur moyenne comprise entre 1 et plusieurs centaines de micromètres, pour un diamètre compris entre 1 et 100 nanomètres, et préférentiellement entre 1 et 30 nanomètres. A titre d'exemple, on a obtenu des résultats satisfaisants avec des nanotubes ayant un diamètre interne voisin de 5 nm pour un diamètre externe entre 10 et 20 nanomètres.

L'invention concerne le procédé de préparation du fil tel que défini à la revendication 12.

La composition RFL est préparée selon les procédés connus de l'homme de l'art par mélange de résorcinol ou d'une résine résorcinol formaldéhyde dans l'eau avec une suspension dans l'eau d'un latex à pH basique, ledit pH basique étant obtenu par addition d'ammoniaque. La composition obtenue par mélange étant éventuellement laissée à mûrir pendant environ 48 h à température ambiante.

Avantageusement en pratique, dans la solution de résorcinol-formaldéhyde et de latex (RFL), la fraction de résine de résorcinol-formaldéhyde représente de 2 à 30 % en poids sec, la fraction de latex représentant de 70 à 98 %.

Préférentiellement, la fraction de résine de résorcinol-formaldéhyde représente de 5 à 10 % en poids sec, la fraction de latex représentant de 80 à 95 %.

Lorsque les fils sont destinés à être noyés dans du caoutchouc pour la réalisation de courroies, le latex utilisé peut avantageusement être de l'acrylonitrile butadiène hydrogéné et carboxylé (X-HNBR), de l'acrylonitrile hydrogéné (HNBR), de l'acrylonitrile (NBR), de l'éthylène propylène diène (EPDM), du polyéthylènechlorosulfoné (CSM), voire du vinyle pyridine styrène butadiène (VP/SBR) ou du styrène butadiène (SBR), pris seuls ou en mélange. Lorsque les fils obtenus sont destiné à renforcer les pneumatiques, le latex utilisé peut être du vinyle pyridine styrène butadiène (VP/SBR), du styrène butadiène (SBR), du latex de caoutchouc naturel (NR), pris seuls ou en mélange.

La dispersion de nanotubes est obtenue en additionnant sous très forte agitation de la poudre de nanotubes dans de l'eau contenant un tensio-actif.

La très forte agitation est obtenue en mettant en oeuvre un agitateur provoquant un taux de cisaillement supérieur à 20 000 tours/min.

Une étape importante du procédé de fabrication consiste à obtenir une suspension dans laquelle les nanotubes sont, autant que possible, dispersés de manière individuelle et dissociés les uns des autres. En d'autres termes, on recherche à éliminer ou au moins à réduire au maximum la taille des agglomérats de nanotubes dans lesquels les molécules filiformes sont rassemblées et entremêlées les unes aux autres.

Différents procédés peuvent être mis en oeuvre pour assurer la dispersion des nanotubes dans la suspension.

On peut ainsi agir par un mélange à très fort cisaillement, ou bien encore par des technologies d'exposition aux ultrasons ou la combinaison de ces deux techniques.

Dans certains cas, il peut être utile d'utiliser des agents tensio-actifs qui permettent dans une certaine mesure de maintenir les nanotubes séparés les uns des autres, afin d'obtenir des agglomérats de faible dimension, typiquement inférieure à quelques microns. Différents types de tensioactifs peuvent être utilisés en fonction de la suspension contenant les nanotubes, et des autres composants en suspension.

A titre d'exemple on peut citer les tensioactifs anioniques, cationiques ou neutres, ainsi que les tensioactifs non ioniques ou amphotères, voire encore des tensioactifs siliconés, fluorés ou polymériques.
On préférera utiliser une dispersion de nanotubes présentant un pH neutre ou basique, compatible avec le pH basique des solutions de RFL.

L'étape de mélange par introduction de la suspension dans la composition, pour obtenir une suspension, est effectuée sous agitation faible, en mettant en oeuvre un agitateur provoquant un taux de cisaillement inférieur à 300 tours/min.

Comme déjà dit, ces nanotubes peuvent être inclus dans le revêtement d'adhérisage ou film RFL et également dans la dissolution de matériau caoutchoutique dans un solvant destinée à enduire des fils préalablement revêtus du revêtement d'adhérisage ou film RFL, pour former une couche extérieure.

La teneur en nanotubes de carbone est de l'ordre de 0,5 à 10 % en poids en nanotubes de carbone, proportion mesurée en extrait sec dans la couche extérieure réalisée par application de la dissolution de matériau caoutchoutique dans un solvant.

Lorsque les nanotubes sont incorporés dans la dissolution de matériau caoutchoutique dans un solvant, l'incorporation sera effectuée selon les procédés décrits dans l'art antérieur.

Pour certaines applications, on peut choisir d'utiliser des nanotubes qui sont en tout ou partie fonctionalisés, c'est-à-dire qui possèdent des molécules qui ont été greffées sur les nanotubes pour donner des propriétés particulières, et typiquement de compatibilité chimique avec certaines matrices dans lesquelles baignent les nanotubes.

L'étape de couchage, imprégnation ou dépose de la suspension obtenue après mélange sur un fil est réalisée selon les techniques connues de l'homme de l'art et comporte éventuellement une étape de dérompage pour imprégner individuellement les fibres constitutives du fil.

Cette étape de couchage, imprégnation ou dépose de la suspension obtenue après mélange sur un fil est ensuite suivie d'une étape de séchage et/ou de réticulation.

Le procédé conforme à l'invention comporte après l'étape d'imprégnation, et avant l'étape de séchage, une étape de calibrage de l'emport. Ce calibrage permet d'assurer une élimination de l'excès du bain qui est entraîné lors de l'imprégnation.

Après calibrage, la fibre ne conserve qu'une quantité réduite de la solution de RFL, la quantité superflue étant ainsi éliminée. Le séchage ultérieur de la fibre n'a lieu que pour la quantité optimale de solution de RFL.

En pratique, le calibrage de l'emport peut être obtenu par passage des fibres dans une filière. Le passage par une filière permet en outre de rassembler les différents filaments s'ils sont encore écartés après l'imprégnation. En outre, le passage en filière permet de presser le bain à l'intérieur de la fibre, et d'assurer une meilleure imprégnation à coeur. La fibre obtenue en sortie de filière est plus ronde, ce qui s'avère intéressant pour les opérations ultérieures.

L'invention couvre également les variantes dans lesquelles le calibrage de l'emport est obtenu par foulardage ou un procédé équivalent.

Dans certaines formes particulières, il peut s'avérer intéressant, après l'étape de séchage, de procéder à un chauffage des fibres aptes à polymériser la fraction de solution de résine de résorcinol-formaldéhyde et de latex imprégnée dans les fibres. Cette polymérisation, correspondant à une réticulation du RFL, est effectuée après le séchage qui a provoqué une évaporation de l'essentiel de l'eau du bain d'imprégnation restant sur les fibres.

Pour l'utilisation des fils selon l'invention dans certains articles tels que notamment les courroies de transmission synchrone, il peut s'avérer avantageux que le procédé conforme à l'invention comporte en outre une étape d'imprégnation supplémentaire du fil, dans un adhésif en milieu solvant. Cette étape permet d'obtenir une couche supplémentaire recouvrant la fibre. Cette couche supplémentaire, formant une couronne autour de la fibre est particulièrement avantageuse pour assurer une bonne adhésion avec certains types de caoutchouc tels que l'acrylonitrile (NBR), l'acrylonitrile hydrogéné (HNBR), l'acrylonitrile hydrogéné carboxylé (X-HNBR), l'acrylonitrile hydrogéné à vulcanisation (ZSC), le polyéthylène chlorosulfoné (CSM), le polyéthylène chlorosulfoné alkylé (ACSM), l'éthylène propylène diène (EPDM).

En pratique, l'adhésif en milieu solvant est un mélange de polymères éventuellement halogénés, de composés organiques comme des isocyanates.

### Modes de réalisation l'invention

### Exemple 1 :

### Préparation du bain de RFL."

La formulation comporte deux mélanges (A et B) que t'on rassemble très lentement et que l'on laisse mûrir environ 48h à température ambiante.

Le mélange A contient de façon classique de l'eau permutée (pour 126 litres), une résine telle que celle commercialisée sous la référence Phénolite TD 2241 par la société Daïnippon Ink (pour 22,5 kg), du formaldéhyde à 30,5% de la marque UNIVAR (pour 7,1 litres) et de la soude à 30% (pour.800 ml); l'ensemble étant agité pendant 10 minutes à 60 trs/min à température ambiante.

Le mélange B contient du latex Pliocord VP 106 commercialisé par la société Eliochem (pour 400 kg), de l'ammoniaque à 20,5% (pour 31 litres) et le latex Pliocord SB 2108 Commercialisé par la société Eliochem (pour 200 kg), l'ensemble étant agité au préalable à 35 trs/min à une température comprise entre 20 et 30°C.

Enfin, on ajoute dans le mélange A+B une cire telle que celle commercialisée sous la référence S-Wax par la société Sasada Chemical Industries (pour 31,5 kg). Pour ajuster la concentration, on peut à nouveau ajouter de l'eau permutée.

### Préparation de la dispersion aqueuse de nanotubes de carbone dans de l'eau :

On peut utiliser de la poudre de nanotubes tels que commercialisée par les sociétés Arkéma, Bayer ou Nanocyl, ayant une granulométrie supérieure à 100µm. Les proportions utilisées sont données ci-dessous :

| | |
|---|---|
| Poudre de nanotubes de carbone | 0,75 g |
| Eau | 75 g |
| Tensio-actif (poly phosphate d'ammonium) | 0,19 g |

La préparation est réalisée en introduisant sous agitation faible, le tensio-actif dans l'eau. Puis la poudre de nanotubes est ajoutée dans l'eau contenant le tensio-actif sous très forte agitation, typiquement un très fort cisaillement supérieur à 20000 tours/min obtenu par exemple grâce à un outil du type Ultra Turax.

Cette dispersion est ensuite introduite lentement dans le RFL, avec les proportions suivantes : 61g de dispersion aqueuse dans 85,5g de bain RFL (dont l'extrait sec est de 35,7%). Cette introduction est effectuée avec cette fois un faible cisaillement pour ne pas déstructurer le RFL (< 300 trs/min). Cette agitation est maintenue pendant 30 minutes.

Pour caractériser l'effet de l'invention, on a procédé à l'enduction de la solution obtenue sur des non tissés (PES/Cellulose de 20g/m²) qui ont des forces de rupture suffisamment faibles pour que l'on observe des écarts dus au type de film déposé dessus. Les conditions d'enduction sont les suivantes : racle sur cylindre - cale de 20 - séchage 1 minute à 110°C. Les résultats mécaniques obtenus en traction à température ambiante (capteur de 100N - vitesse de 100 mm/min - 10 cm entre petits mors pneumatiques avec une largeur d'éprouvette de 5 cm) sont donnés ci-dessous :

| Formules | force (N) | % gain |
|---|---|---|
| RFL non chargé | 7,48 | |
| RFL + 2% de nanotubes de carbone | 10,02 | 33,93 |
| RFL + 2% de nanotubes de carbone + Tensio-actif | 11,34 | 51,53 |

Le gain est calculé en rapportant la différence des 2 forces (chargé - non chargé) rapporté à celle du film non chargé.

On observe une amélioration des forces de rupture pour les films chargés, et une force encore plus importante pour la formulation contenant le tensio-actif. Le gain dépasse 40%. On peut comparer ces valeurs à des tests faits sur le même RFL chargé avec un taux plus important de noir de carbone pour lesquels les gains obtenus à température ambiante sur les résistances mécaniques restent inférieurs à ceux obtenus avec un taux bien plus faible de nanotubes.

| Formules | T ambiante | | T test 130°C | |
|---|---|---|---|---|
| | force (N) | % gain | force (N) | % gain |
| RFL non chargé | 14 | | 9,9 | |
| RFL + 7% noir de carbone | 17,7 | 23.8 | 9,9 | 0,5 |

Lors du test en température, l'utilisation des noirs de carbone se révèle dégrader les propriétés du film de RFL.

### Exemple 2 :

Le RFL choisi est différent de l'exemple précédent. Le mélange est constitué de 3 préparations que l'on assemble aux gouttes à gouttes :
- la préparation A contient de l'eau permutée (pour 61 g), de l'ammoniaque à 20,5% (pour 7 g), de l'urée à 41% commercialisée par la société Verre Labo Mula (pour 45,5 g) et de la résine commercialisée sous la référence Pénacolite par la société Indspec Chemical Corp (pour 17 g);
- la préparation B contient du latex Zetpol-B (HNBR) tel que commercialisé par la société Nippon Zeon (pour 480 g) et de l'eau permutée (pour 52 g). La préparation A est introduite dans préparation B.
- Enfin, on additionne une préparation C qui contient de l'eau permutée (pour 27 g) et du formaldéhyde à 30% de la société UNIVAR (pour 6,7 g). Le tout est laissé à mûrir à 20°C pendant 12h.

Les proportions utilisées sont les mêmes que précédemment soit 2% de nanotubes en sec par rapport au RFL.

Les résultats mécaniques obtenus en traction statique (mêmes conditions que exemple 1) sont les suivants, en ce qui concerne les forces de rupture des films.

| | Température du test : ambiante | | Température du test : 130°C | |
|---|---|---|---|---|
| Formules | force (N) | % gain | force (N) | % gain |
| RFL non chargé | 14 | | 9.6 | |
| RFL + 2% de nanotubes de carbone | 18,7 | 33,7 | 13,2 | 40 |

Les formules chargées présentent une amélioration des propriétés mécaniques en traction à température ambiante et à 130°C; ce qui incite à l'utilisation de ce type de nanocharges dans les formulations RFL pour augmenter la durée de vie du complexe fil de renfort/article caoutchoutique.

### Exemples 3 à 5

Selon les mêmes modes opératoires que ceux décrits aux exemples 1 et 2 des RFL selon l'invention ont été réalisés selon les caractéristiques rassemblées dans le tableau suivant :

| Exemples | Nature de la Résine | Nature du latex | Taux de RF/L |
|---|---|---|---|
| 3 | Pénacolite | Zetpol B | 7,4 % |
| 4 | Phenolite TD2241 | MIXTURE VP, SBR | 7,8 % |
| 5 | Phenolite TD2241 | CSM 450 | 19,5 % |

| | | | |
|---|---|---|---|
| * note . les pourcentages sont donnés par rapport à l'extrait sec | | | |

Dans chacune de ces formulations une dispersion de nanotubes dans des proportions de 2% de nanotubes en sec par rapport au RFL a été ajoutée.

Il ressort de ce qui précède que les éléments de renforcement conformes à l'invention présentent l'avantage d'augmenter notablement les propriétés mécaniques du film d'adhérisage (en flexion, cisaillement et compression), ce qui peut améliorer la durée de vie des articles composites qui les intègrent. En effet, à long terme, la dégradation des propriétés mécaniques est moindre qu'avec des fils de l'Art Antérieur.

De même, l'emploi de nanotubes permet d'améliorer la tenue en température par rapport à des articles analogues. Selon les applications, les propriétés de tenue au bain d'huile peuvent être également améliorées.

### Exemple 6

### Analyse thermomécanique dynamique (DMTA)

Les mesures de DMTA sont faites sur des films, obtenus par séchage à température ambiante puis réticulés 3 min à l'étuve à 250°C (méthode standard). Ils doivent avoir une épaisseur régulière et constante, sans bulles ni défauts.

Les éprouvettes de film ont une hauteur constante de 18mm.

Le RFL est formulé à partir de résorcinol Pénacolite, de formol et de latex Zetpol B puis mûris, avec un taux R/L de 7,4 % (exemple 3).

Le RFL est formulé à partir de résorcinol Phénolite TD2241 , de formol et de latex mélange VP, SBR puis mûris, avec un taux de R/L de 7,8 % (exemple 4).

L'épaisseur des échantillons testés varie de 0,55 à 0,64 mm pour l' exemple 3 non chargé, de 0,36 à 0,40 mm pour l'exemple 3 chargé 2% de nanotubes de carbone et de 0,59 à 0,76 mm pour l'exemple 4.

Des sollicitations en cisaillement à 10 et 52Hz (fréquence réellement subie par la courroie) avec un balayage en température de - 80°C à 150°C. ont été appliquées.

L'évolution du module en cisaillement, module de Coulomb G' (la contrainte de cisaillement requise pour produire une déformation de cisaillement par unité, c'est-à-dire G'=contrainte de cisaillement/déformation de cisaillement) (rigidité du matériau), l'angle de perte (capacité d'amortissement) et la transition vitreuse Tg (passage de l'état vitreux à l'état caoutchoutique) ont été suivis et mesurés..

Les mesures sont effectuées sur le DMA 150 de METRAVIB.

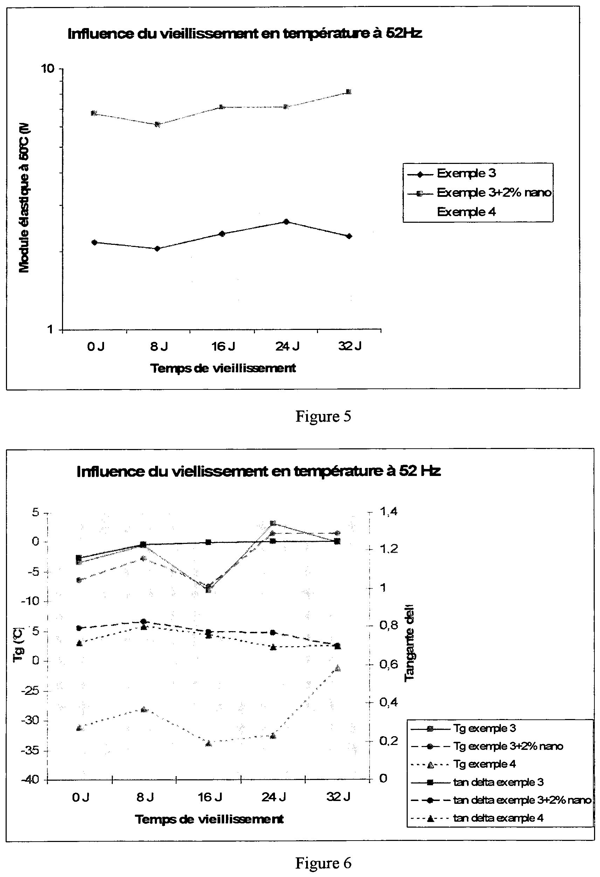

Les résultats obtenus sont présentés sur les courbes Figures 5 et 6.

### Exemple 7

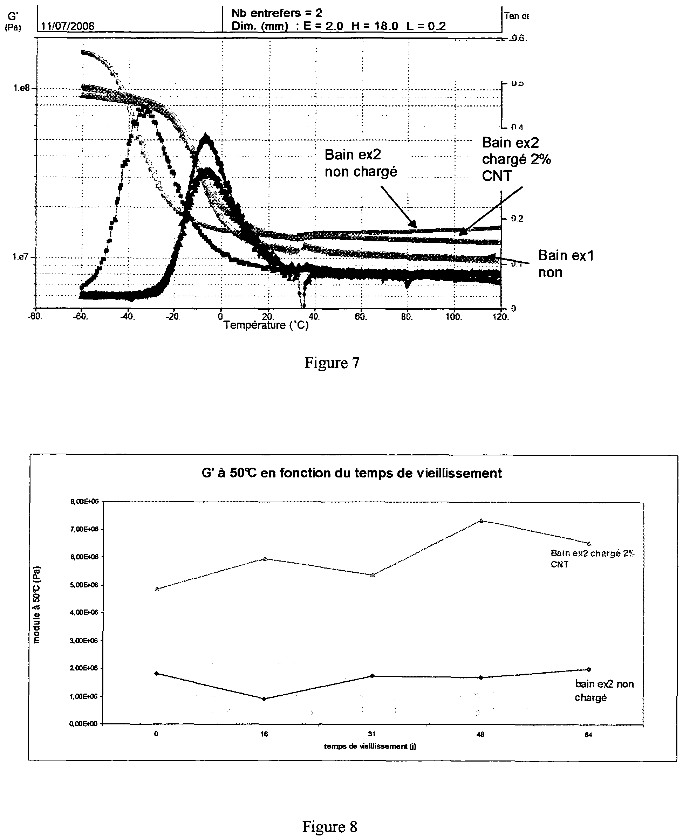

De la même manière que précédemment des fils de verre imprégnés de bain RFL décrit dans les exemples 1 & 2 et chargés de nanotubes (2 %) ont été caractérisés sous cisaillement dynamiques. Les résultats sont précisés dans les courbes Figures 7 qui montrent des comportements différents entre les familles de RFL (dans les 2 cas, ces évolutions sont similaires à ce qui peut être observé sur films); ainsi qu'entre les formules non chargées et chargées à 2 % de CNT.

Exemple 8 : Suivi des caractéristiques mécaniques dynamiques en cisaillement des films de RFL de différente nature non chargés et chargés (formule de l'exemple 2) au cours d'un vieillissement thermique (120° C) statique en étuve.

### Essais de vieillissement statique :

Ces mesures ont été réalisées sur des films qui ont vieilli en étuve à 100°C puis caractérisés par DMA en balayage en température.

Nous observons au bout de 2 mois de vieillissement, une faible augmentation du module G' pour les films chargés et un maintien de G' pour les films non chargés.

Les résultats obtenus sont présentés sur les courbes Figure 8.

### Essais de fatigue dynamique

100Hz - 120°C - sans force statique - déplacement imposé 100µm :
Ces mesures montrent un allongement important des films non chargés au cours de ce test de fatigue et un allongement réduit du film chargé du à la présence de CNT (donc d'un second réseau qui maintient la structure).

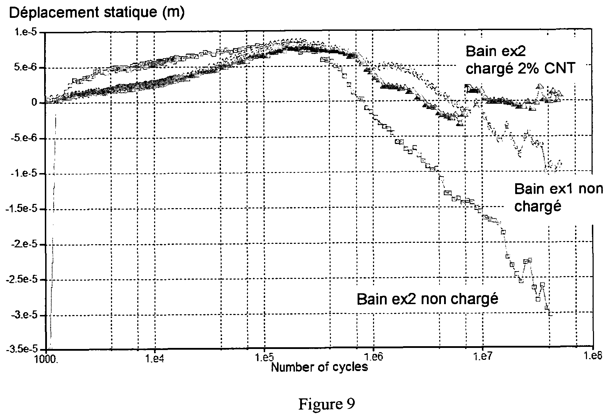

Les résultats obtenus sont présentés sur les courbes Figure 9.

## Revendications

1. Fil revêtu ou imprégné d'un revêtement d'adhérisage ou film RFL constitué d'une composition aqueuse comprenant une résine résorcinol formaldéhyde et un latex de matériau caoutchoutique, et comportant des nanotubes de carbone, le fil revêtu ou imprégné étant obtenu par une étape d'imprégnation de ladite composition aqueuse sur le fil et une étape de calibrage de l'emport, de préférence au travers d'une filière, puis de séchage.

2. Fil selon la revendication 1, **caractérisé en ce que** le revêtement d'adhérisage ou film RFL comporte un tensioactif apporté par l'addition sous très forte agitation obtenue en mettant en oeuvre un agitateur provoquant un taux de cisaillement supérieur à 20 000 tours/min de la poudre de nanotubes de carbone dans de l'eau contenant un tensioactif.

3. Fil selon la revendication 1 ou 2, **caractérisé en ce que** le fil a subi une étape de dérompage pour imprégner individuellement les fibres constitutives du fil.

4. Fil selon l'une quelconque des revendications 1 à 3, **caractérisé en ce que** le revêtement d'adhérisage ou film RFL comprend de 0,5 à 10 % en poids de nanotubes de carbone, en extrait sec.

5. Fil selon l'une quelconque des revendications précédentes, **caractérisé en ce que** les nanotubes sont de type mono feuillet ou multi feuillets.

6. Fil selon l'une quelconque des revendications précédentes, **caractérisé en ce que** les nanotubes sont en tout ou partie non fonctionnalisés.

7. Fil selon l'une quelconque des revendications précédentes, **caractérisé en ce que** les fils sont choisis dans le groupe comprenant les fils de verre, de carbone, d'aramide, de polyester, de polyvinylalcool, de polyamide et de rayonne.

8. Fil selon l'une quelconque des revendications précédentes, **caractérisé en ce qu'**il comporte en outre un revêtement ou topcoat à base de dissolution de matériau caoutchoutique dans un solvant.

9. Fil selon la revendication 8, **caractérisé en ce que** le revêtement ou topcoat à base de dissolution de matériau caoutchoutique dans un solvant comporte des nanotubes de carbone.

10. Utilisation des fils selon l'une quelconque des revendications 1 à 9, pour le renfort d'un article à base de matériau caoutchoutique, le fil étant incorporé dans l'article individuellement ou assemblé avec des fils similaires ou différents par câblage et/ou retordage.

11. Utilisation selon la revendication 10, **caractérisée en ce que** l'article est choisi dans le groupe constitué par une courroie, un tuyau, une durite, une conduite ou un pneumatique.

12. Procédé de préparation d'un fil selon l'une quelconque des revendications 1 à 9, caractérisé en qu'il comprend :
- une étape de préparation de la composition RFL,
- une étape de préparation d'une dispersion de nanotubes de carbone,
- une étape de mélange par introduction de la suspension dans la composition, pour obtenir une suspension,
- une étape d'imprégnation de la suspension obtenue après mélange sur un fil et
- une étape de calibrage de l'emport, puis de séchage,

13. Procédé selon la revendication 12, **caractérisée en ce que** dans la composition RFL la fraction de résine de résorcinol-formaldéhyde représente de 2 à 30 % en poids sec et la fraction de latex représente de 70 à 98 % en poids sec.

14. Procédé selon l'une quelconque des revendications 12 ou 13, **caractérisée en ce que** l'étape de mélange par introduction de la dispersion dans la composition, pour obtenir une suspension, est effectuée sous agitation faible, en mettant en oeuvre un agitateur provoquant une vitesse de cisaillement inférieur à 300 tours/min.

15. Procédé selon l'une quelconque des revendications 12 à 14, **caractérisé en ce que** la dispersion aqueuse inclue un mélange avec un ou plusieurs composés tensioactifs.

16. Procédé de préparation d'un fil selon l'une quelconque des revendications 12 à 15, **caractérisé en ce que** l'étape de couchage, imprégnation ou dépose de la suspension obtenue après mélange sur un fil comporte une étape de dérompage pour imprégner individuellement les fibres constitutives du fil.

17. Procédé selon la revendication 16, **caractérisé en ce que** l'étape de couchage, imprégnation ou dépose de la suspension obtenue après mélange sur un fil est suivie d'une étape de séchage et/ou réticulation.

18. Procédé selon l'une quelconque des revendications 16 à 17, **caractérisé en ce qu'**il comporte l'étape de calibrage de l'emport est réalisée par passage du fil dans une filière ou par foulardage du fil.

19. Procédé selon l'une quelconque des revendications 16 à 18, **caractérisé en ce qu'**il comporte en outre une étape d'imprégnation supplémentaire du fil, dans un adhésif en milieu solvant.

20. Elément de renfort longitudinal à base de fils selon l'une quelconque des revendications 1 à 9, destiné à être incorporé dans un article à base de matériau caoutchoutique.

## Patentansprüche

1. Faden, der mit einer Haftbeschichtung oder einem RFL-Film beschichtet oder imprägniert ist, die/der aus einer wässrigen Zusammensetzung besteht, umfassend ein Resorcin-Formaldehydharz und einen Latex aus gummiartigem Material, und umfassend Kohlenstoffnanoröhren, wobei der beschichtete oder imprägnierte Faden durch einen Imprägnierschritt der Faser mit der wässrigen Zusammensetzung und einen Kalibrierungsschritt des Aufbaus, vorzugsweise durch eine Spinndüse, und dann eines Trocknens erlangt wird.

2. Faden nach Anspruch 1, **dadurch gekennzeichnet, dass** die Haftbeschichtung oder RFL-Folie ein Tensid umfasst, das durch Hinzufügen des Kohlenstoffnanoröhrenpulvers in das Wasser, das ein Tensid enthält, unter sehr starkem Rühren, das durch Einsatz eines Rührers, der eine Scherrate von mehr als 20.000 U/min bewirkt, erlangt wird, beigefügt wird.

3. Faden nach Anspruch 1 oder 2, **dadurch gekennzeichnet, dass** der Faden einem Schritt der Entstörung unterzogen wurde, um die das Garn bildenden Fasern einzeln zu imprägnieren.

4. Faden nach einem der Ansprüche 1 bis 3, **dadurch gekennzeichnet, dass** die Haftbeschichtung oder RFL-Folie 0,5 bis 10 Gewichtsprozent Kohlenstoffnanoröhren, bezogen auf den Feststoffanteil, umfasst.

5. Faden nach einem der vorherigen Ansprüche, **dadurch gekennzeichnet, dass** die Nanoröhren vom Einblatt- oder Mehrblatttyp sind.

6. Faden nach einem der vorherigen Ansprüche, **dadurch gekennzeichnet, dass** die Nanoröhren ganz oder teilweise nicht funktionalisiert sind.

7. Faden nach einem der vorherigen Ansprüche, **dadurch gekennzeichnet, dass** die Fäden ausgewählt sind aus der Gruppe, bestehend aus Glas-, Kohlenstoff-, Aramid-, Polyester-, Polyvinylalkohol-, Polyamid- und Rayonfäden.

8. Faden nach einem der vorherigen Ansprüche, **dadurch gekennzeichnet, dass** er ferner eine Beschichtung oder eine Obersicht basierend auf einem Auflösen von gummiartigem Material in einem Lösungsmittel umfasst.

9. Faden nach Anspruch 8, **dadurch gekennzeichnet, dass** die Beschichtung oder die Oberschicht basierend auf einem Auflösen von gummiartigem Material in einem Lösungsmittel Kohlenstoffnanoröhren umfasst.

10. Verwendung von Fäden nach einem der Ansprüche 1 bis 9 zum Verstärken eines Artikels auf der Basis von gummiartigem Material, wobei der Faden einzeln in den Artikel eingearbeitet oder durch Verseilen und/oder Zwirnen mit ähnlichen oder anderen Fäden verbunden wird.

11. Verwendung nach Anspruch 10, **dadurch gekennzeichnet, dass** der Artikel ausgewählt ist aus der Gruppe, bestehend aus einem Riemen, einem Schlauch, einem Rohr, einer Leitung oder einem Reifen.

12. Verfahren zum Herstellen eines Fadens nach einem der Ansprüche 1 oder 9, **dadurch gekennzeichnet, dass** es Folgendes umfasst:
- einen Schritt zum Herstellen der RFL-Zusammensetzung,
- einen Schritt zum Herstellen einer Dispersion von Kohlenstoffnanoröhren,
- einen Schritt zum Mischen durch Einbringen der Suspension in die Zusammensetzung, um eine Suspension zu erlangen,
- einen Schritt zum Imprägnieren der nach dem Mischen erhaltenen Suspension auf einem Faden, und
- einen Schritt zum Kalibrieren des Aufbaus und dann eines Trocknens.

13. Verfahren nach Anspruch 12, **dadurch gekennzeichnet, dass** in der RFL-Zusammensetzung die Resorcin-Formaldehydharzfraktion 2 bis 30 % des Trockengewichts darstellt und die Latexfraktion 70 bis 98 % des Trockengewichts darstellt.

14. Verfahren nach einem der Ansprüche 12 oder 13, **dadurch gekennzeichnet, dass** der Schritt des Mischens durch Einbringen der Dispersion in die Zusammensetzung, um eine Suspension zu erlangen, unter schwachem Rühren durchgeführt wird, wobei ein Rührer eingesetzt wird, der eine Schergeschwindigkeit von weniger als 300 U/min bewirkt.

15. Verfahren nach einem der Ansprüche 12 bis 14, **dadurch gekennzeichnet, dass** die wässrige Dispersion ein Mischen mit einer oder mehreren oberflächenaktiven Verbindungen beinhaltet.

16. Verfahren zum Herstellen eines Fadens nach einem der Ansprüche 12 bis 15, **dadurch gekennzeichnet, dass** der Schritt eines Beschichtens, Imprägnierens oder Aufbringens der nach Mischen erlangten Suspension auf einem Faden einen Zerkleinerungsschritt umfasst, um die den Faden bildenden Fasern einzeln zu imprägnieren.

17. Verfahren nach Anspruch 6, **dadurch gekennzeichnet, dass** auf den Schritt des Beschichtens, Imprägnierens oder Aufbringens der nach dem Mischen erlangten Suspension auf einem Faden ein Schritt eines Trocknens und/oder Vernetzens folgt.

18. Verfahren nach einem der Ansprüche 16 bis 17, **dadurch gekennzeichnet, dass** es den Kalibrierschritt des Aufbaus umfasst, die durch ein Durchziehen des Fadens durch eine Spinndüse oder durch das Walken des Fadens erfolgt.

19. Verfahren nach einem der Ansprüche 16 bis 18, **dadurch gekennzeichnet, dass** es ferner einen zusätzlichen Imprägnierschritt des Fadens in einem Klebstoff in Lösungsmittelmedium umfasst.

20. Längsverstärkungselement auf Fadenbasis nach einem der Ansprüche 1 bis 9, das dazu bestimmt ist, in einen Artikel auf Basis von gummiartigem Material eingearbeitet zu werden.

## Claims

1. Yarn coated or impregnated with an adhesive dip coating or RFL film comprising an aqueous composition comprising a resorcinol formaldehyde resin and a rubber material latex, and comprising carbon nanotubes, wherein the coated or impregnated yarn being obtained by a step of impregnating the said aqueous composition onto the yarn, and a step of calibrating the coating, preferably through a die, and then drying of.

2. The yarn of claim 1, **characterized in that** the adhesive dip coating or RFL film comprises a surfactant provided by the addition under very high stirring using a stirrer that causes a shear rate of greater than 20 000 rpm of the powder of carbon nanotubes into water containing a surfactant.

3. The yarn according to claim 1 or 2, **characterized in that** the yarn has undergone a splaying step to individually impregnate the constituent fibers of the yarn.

4. The yarn according to any one of claims 1 to 3, **characterized in that** the adhesive dip coating or RFL film comprises from 0.5 to 10 wt% carbon nanotubes, on a solids basis.

5. The yarn according to any one of the preceding claims, **characterized in that** the nanotubes are of the single sheet or multi-sheet type.

6. The yarn according to any one of the preceding claims, **characterized in that** the nanotubes are wholly or partially unfunctionalized.

7. The yarn according to any one of the preceding claims, **characterized in that** the yarns are selected from the group consisting of glass, carbon, aramid, polyester, polyvinyl alcohol, polyamide and rayon yarns.

8. The yarn according to any of the preceding claims, **characterized in that** it further comprises a coating or topcoat based on dissolving rubber material in a solvent.

9. The yarn according to claim 8, **characterized in that** the coating or topcoat based on dissolution of rubber material in a solvent comprises carbon nanotubes.

10. Use of the yarns according to any one of claims 1 to 9, for the reinforcement of an article based on rubber material, the yarn being incorporated into the article individually or assembled with similar or different yarns by cabling and/or twisting.

11. The use according to claim 10, **characterized in that** the article is selected from the group consisting of a belt, a tube, a hose, a pipe or a tire.

12. A process of preparing a yarn according to any one of claims 1 to 9, **characterized in that** it comprises:
- a step of preparing the RFL composition,
- a step of preparing a dispersion of carbon nanotubes,
- a mixing step by introducing the suspension into the composition, to obtain a suspension,
- a step of impregnating the suspension obtained after mixing on a yarn, and
- a step of sizing the coating, then of drying.

13. The process of claim 12, **characterized in that** in the RFL composition the resorcinol-formaldehyde resin fraction is from 2 to 30 dry weight percent and the latex fraction is from 70 to 98 dry weight percent.

14. The process according to any one of claims 12 or 13, **characterized in that** the mixing step by introducing the dispersion into the composition, to obtain a suspension, is carried out under low agitation, using an agitator causing a shear rate lower than 300 rpm.

15. The process according to any one of claims 12 to 14, **characterized in that** the aqueous dispersion includes a mixture with one or more surfactant compounds.

16. The process for preparing a yarn according to any one of claims 12 to 15, **characterized in that** the step of coating, impregnating or depositing the suspension obtained after mixing on a yarn comprises a splaying step to individually impregnate the constituent fibers of the yarn.

17. The process according to claim 16, **characterized in that** the step of coating, impregnating or depositing the suspension obtained after mixing on a yarn is followed by a drying and/or crosslinking step.

18. The process according to any one of claims 16 to 17, **characterized in that** it comprises the step of sizing the coating carried out by passing the yarn through a die or by padding the yarn.

19. The process according to any one of claims 16 to 18, **characterized in that** it further comprises a step of additional impregnation of the yarn, in an adhesive in solvent medium.

20. A longitudinal reinforcing element based on yarns according to any one of claims 1 to 9, intended to be incorporated into an article based on rubber material.
